# EUROPÄISCHE PATENTANMELDUNG

(11) **EP 3 133 461 A1**
(43) Veröffentlichungstag der Anmeldung: **22.02.2017**
(21) Anmeldenummer: 15181769.9
(22) Anmeldetag: 20.08.2015
(51) Int. Cl.: G05D 19/02

(54) **MODELLBASIERTER BEOBACHTER ZUR DÄMPFUNG EINES MECHANISCHEN SYSTEMS UND VERFAHREN**

(71) Anmelder: Siemens Aktiengesellschaft, 80333 München (DE)
(72) Erfinder: Hamm, Carsten, 91058 Erlangen (DE); Klotzek, Andreas, 91052 Erlangen (DE); Schäfers, Elmar, 90763 Fürth (DE)

(57) **Zusammenfassung**

Die Erfindung betrifft einen modellbasierten Beobachter (10) zur Dämpfung eines mechanischen Systems (6) und/oder einer Regelstrecke (3) durch einen Regelkreis (9) umfassend mehrerer Stellgrößen umfassend:
- Eine erste Rückführung (4), durch welche zumindest eine im System gemessene Messgröße (n_{M}) als Regelgröße rückführbar ist, und welche zur Einstellung zumindest einer der Stellgrößen mit einem Sollwert vergleichbar ist,
- Ein mathematisches Modell (11) zur Abbildung des dynamischen Verhaltens des mechanischen Systems (6) und der Regelstrecke (3) durch in einem mathematischen Modell (11) erzeugter Modellvariablen,
- Einen Abgleich vorhandener Messgrößen mit korrespondierenden Modellvariablen des Modells (11) zur Stabilisierung des Beobachters (10) und zur Nachführung vorhandener dynamischer Messgrößen,
- Ein Erzeugen zumindest einer geschätzten mechanischen Größe mittels des Modells (11) zur Dämpfung des mechanischen Systems (6) und/oder der Regelstrecke (3),
- so dass durch den Beobachter (10) der Verlauf zumindest einer mechanischen Größe des mechanischen Systems (6) und/oder der Regelstrecke (3) berechenbar ist, insbesondere einer Größe die messtechnisch nicht erreichbar ist.

Weiterhin betrifft die Erfindung ein Verfahren.

## Beschreibung

Die Erfindung betrifft einen modellbasierten Beobachter zur Dämpfung eines mechanischen Systems und/oder einer Regelstrecke durch einen Regelkreis umfassend mehrerer Stellgrößen sowie ein Verfahren.

Keine Maschine (z.B. Werkzeugmaschine) ist ausreichend steif gebaut und neigt daher zu Schwingungen (Resonanzfrequenzen). Die Oszillationen werden aufgrund von kommandierten Beschleunigungen oder aufgrund von Prozesskräften (z.B. Fräsen) angeregt.

Bei modernen Werkzeugmaschinen, Produktionsmaschinen oder Robotern treten häufig an den Achsen, insbesondere an den NC-Achsen (Numerical Control Achsen) der Maschine unerwünschte Schwingungen auf, wobei in den folgenden Ausführungen unter der Bezeichnung Maschine auch Roboter zu verstehen sind. Ursächlich für die Schwingungen sind schwach gedämpfte mechanische Resonanzen des mechanischen Systems der Maschine. Infolge wird die Geschwindigkeit der Achse an den Resonanzstellen unerwünscht erhöht bzw. vermindert. Es entstehen unerwünschte Rattermarken, welche die Maschine mechanisch belasten und zu einer verminderten Verarbeitungsgenauigkeit führen. Das mechanische System der Maschine besitzt dabei in der Regel mehrere Resonanzstellen, welche jeweils auf einen begrenzten Frequenzbereich beschränkt sind.

Als nachteilige Auswirkung sind z.B. die Verletzung der Positioniervorgaben (Überschwingen), der Zeitverlust bis zum Abklingen der Schwingbewegung (Ausschwingen), und die Sichtbarkeit von Marken auf der Oberfläche durch Schwingung zu nennen. Insgesamt ist eine Schwingungsanfälligkeit einer Maschine immer nachteilig für die Produktivität: Entweder ist die Dynamik bei der Feinbearbeitung zu reduzieren (Reduktion Ruck) oder bei der Schruppbearbeitung kann wegen Rattern die Spindelleistung nicht genutzt werden.

Zur Erfüllung von Produktivitätsanforderungen / -zielen müssen die negativen Effekte reduziert werden, d. h. die Schwingungsamplitude / Überschwingweite verkleinert werden, woraus sich ein genaueres Positionieren ergibt. Zudem muss die Schwingungsdauer verkleinert werden, woraus sich ein schnelleres Positionieren ergibt.

Dabei ist unter Produktivität die Genauigkeit in Verbindung mit der Dynamik zu verstehen. Es gibt unterschiedliche antriebsseitige Methoden zur Bekämpfung bzw. Reduzierung dieser Schwingungen. Hier ist zum einen eine stabilere Konstruktion der Maschine anzugeben. Dies ist jedoch nur unter erhöhtem Materialaufwand und Kosten zu realisieren. Zum anderen ist eine aktive Bekämpfung der Schwingung z.B. durch einen zusätzlichen Antrieb oder durch komplexere Methodiken zu nennen. Diese erfordern jedoch zusätzliche Hardware und Kosten sowie unter Umständen eine schwierige Parametrierung.

Nachteiliger Weise erfordern alle Maßnahmen zwingend eine zusätzliche Hardware. Dies kann ein zweites Messsystem, d.h. entweder ein zweites Lagemesssystem oder ein Beschleunigungssensor sein oder weitere Antriebe.

Durch direkte Messung werden auch Eigenfrequenzen im Regelkreis sichtbar, die nicht gedämpft werden sollen, aber aufwändig zu filtern sind. Dies schränkt oft die erreichbare Regelgüte ein.

Steht ein direktes Messsystem zur Verfügung, mit dem eine Rückkopplung einer Messgröße der Werkzeugspitze möglich ist, so kann eine APC-Regelstruktur zur Anwendung kommen. Hinsichtlich derartiger APC-Regelstrukturen wird auf die Patentschrift DE 102 46 093 C1 verwiesen.

Der Erfindung liegt die Aufgabe zugrunde, eine verbesserte und kostengünstige Vorrichtung zur Dämpfung mechanischer Schwingungen ohne zusätzliche Messsysteme oder weitere Antriebe anzugeben. Eine weitere Aufgabe liegt in der Angabe eines solchen Verfahrens.

Die auf die Vorrichtung bezogene Aufgabe wird gelöst durch die Angabe eines modellbasierten Beobachters zur Dämpfung eines mechanischen Systems und/oder einer Regelstrecke durch einen Regelkreis umfassend mehrerer Stellgrößen umfassend:
- Eine erste Rückführung, durch welche zumindest eine im System gemessene Messgröße als Regelgröße rückführbar ist, und welche zur Einstellung zumindest einer der Stellgrößen mit einem Sollwert vergleichbar ist,
- Ein mathematisches Modell zur Abbildung des dynamischen Verhaltens des mechanischen Systems und der Regelstrecke durch in einem mathematischen Modell erzeugter Modellvariablen,
- Einen Abgleich vorhandener Messgrößen mit den korrespondierenden Modellvariablen des Modells zur Stabilisierung des Beobachters und zur Nachführung vorhandener dynamischer Messgrößen,
- Ein Erzeugen zumindest einer geschätzten mechanischen Größe mittels des Modells zur Dämpfung des mechanischen Systems und/oder der Regelstrecke,
- so dass durch den Beobachter der Verlauf zumindest einer mechanischen Größe des mechanischen Systems und/oder der Regelstrecke berechenbar ist, insbesondere einer Größe die messtechnisch nicht erreichbar ist.

Die auf das Verfahren bezogene Aufgabe wird gelöst durch die Angabe eines Verfahrens zum Betrieb eines modellbasierten Beobachters zur Dämpfung mechanischer Schwingungen in einem mechanischen System und/oder einer Regelstrecke durch einen Regelkreis umfassend mehrerer Stellgrößen mit:
- Einer ersten Rückführung, welche zumindest eine im System gemessene Messgröße als Regelgröße rückführt, und welche zur Einstellung zumindest einer der Stellgrößen mit einem Sollwert verglichen wird,
- Einer Abbildung des dynamischen Verhaltens des mechanischen Systems und einer Regelstrecke durch in einem mathematischen Modell in dem Beobachter erzeugten Modellvariablen,
- Einen Abgleich vorhandener Messgrößen mit den korrespondierenden Modellvariablen des Modells zur Stabilisierung des Beobachters und zur Nachführung vorhandener dynamischer Messgrößen in dem Beobachter,
- Und ein Erzeugen zumindest einer geschätzten mechanischen Größe mittels des Modells zur Dämpfung des mechanischen Systems und/oder der Regelstrecke,
- so dass durch eine Berechnung durch den Beobachter der Verlauf zumindest einer mechanischen Größe des mechanischen Systems und/oder der Regelstrecke ermöglicht wird, insbesondere einer Größe die messtechnisch nicht erreichbar ist.

D.h. das Messsignal wird erfindungsgemäß auf Basis eines Beobachters nachgebildet: Dazu wird das dynamische Verhalten des mechanischen Systems in einem mathematischen Modell abgebildet. Dies kann z.B. ein Mehrkörpersystem sein. Das Modell beschreibt das Antwortverhalten des Antriebstrangs auf eine äußere mechanische Anregung (Kraft bzw. Moment). Zusätzlich zum Modell enthält der Beobachter eine erste Rückführung zum Abgleich der Modellzustände mit den vorhandenen Messgrößen z.B. dem Motormesssystem. Die erste Rückführung stabilisiert das Beobachtermodell und sorgt für das Nachführen der dynamischen Größen.

Erfindungsgemäß berechnet das Beobachtermodell den Verlauf mechanischer Größen am realen System, die nicht messtechnisch erreichbar sind. Die Beobachtergrößen ersetzen daher ein fehlendes Messsystem.

Der Beobachter benötigt als Eingangssignale nur Größen, die an einer Maschine sowieso verfügbar sind, hier z.B. die Motorgeschwindigkeit und die Motorkraft. Es muss kein direktes Messsystem mehr verbaut sein. Z.B. sind bei den Direktantrieben Torque- und Linearmotoren standardmäßig keine direkten Messsysteme mehr verbaut.

Erfindungsgemäß sind hier zusätzlich durch die erste Rückführung die Vorteile der Kaskadenregelung miteingebracht. Dabei wird die Kaskadenregelung durch die erste Rückführung gewährleistet und dient der Stabilität des Gesamtsystems, insbesondere des mechanischen Systems und der Regelstrecke.

In den Unteransprüchen sind weitere vorteilhafte Maßnahmen aufgelistet, die beliebig miteinander kombiniert werden können, um weitere Vorteile zu erzielen.

Vorteilhafterweise ist die geschätzte Größe als Stellgröße für ein nachfolgendes Dämpfungssystem ausgestaltet. Dieses kann jedes beliebige Dämpfungssystem sein, welches auf die Eingabe von realen Messwerten angewiesen ist. Durch die Erfindung werden nun anstatt der realen Messwerte vom Beobachter erzeugte Größen verwendet, so dass z.B. auf ein komplexes Messsystem verzichtet werden kann.

Vorteilhafterweise ist die geschätzte Größe als Differenzlagerückführungsgröße ausgestaltet oder als Gebermischungsgröße ausgestaltet. Dadurch ist eine Gebermischung und/oder eine Differenzlagerückführung möglich. Die Vorteile der Gebermischung und der Differenzlagerückführung werden nun auch für Maschinen ohne direktes Messsystem greifbar. Gerade mechanisch schwingungsanfällige Maschinen haben oft keinen DMS (Direktes Messsystem).

Das heißt, die nachgebildete Größe wird für ein Dämpfungsverfahren, insbesondere das APC-System, benutzt. Das APC-System bedämpft die Schwingung, die Gebermischung eröffnet Möglichkeiten für weitere Verfahren zur Schwingungsdämpfung wie z.B. dämpfungsoptimale Parametrierung, und die Differenzlagerückführung erlaubt die Erhöhung der Steifigkeit des Antriebsstrangs z.B. an einem KGT (Kugelgewindetriebe) oder an einem Riemen.

In einer vorteilhaften Ausgestaltung sind dem Beobachter weitere externe Größen zuführbar. Das Beobachtermodell kann daher nicht nur mit den vom eigenen Antrieb ausgeübten Größen, z.B. dem Motormoment versorgt werden, sondern auch mit zu erwartenden, externen Kräften. Sind mechanische Interaktionen durch Prozesskräfte bekannt z. B. der Werkzeugeingriff etc., so können diese als weitere, äußere Kraft dem Modell zugeführt werden. Schwingungen, die auf diese Weise angeregt werden, werden so im Beobachter frühzeitig erkannt und direkt gedämpft.

Vorteilhafterweise ist das mechanische System zur Dämpfung mindestens einer Achse von Werkzeugmaschinen, Produktmaschinen oder Robotern vorgesehen.

Bevorzugt ist der Regelkreis eine Erweiterung des Regelkreises mit APC-System. Die Software APC bekommt daher eine Schnittstelle zu dem Beobachter. Die vom Beobachter erzeugten Größen ersetzen die Messgrößen zumindest teilweise. Direkte Messsysteme haben oft das Problem, dass Signale eingefangen und verstärkt werden, die unerwünscht sind. Der Beobachter betrachtet nur die modellierten Frequenzen sowie den Signalinhalt, der z.B. am Motor sichtbar ist. Das kann die Probleme deutlich reduzieren.

Vorteilhafterweise beschreibt das mathematische Modell das Antwortverhalten eines Antriebstrangs auf eine äußere mechanische Anregung, insbesondere die Kraft bzw. das Moment.

Bevorzugt ist der Bobachter als unabhängige eigene Softwarekomponente ausgestaltet. Der Beobachter wird daher als eigene Softwarekomponente gebaut und kann auch als Standalone, z.B. für Messzwecke, genutzt werden.

In einer vorteilhaften Ausgestaltung ist das mathematische Modell ein Mehrkörpermodell. Auch andere Modelle können jedoch möglich sein.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:
- FIG 1:: einen Regelkreis gemäß dem Stand der Technik,
- FIG 2:: einen erfindungsgemäßen Regelkreis,
- FIG 3:: ein mögliches Innenleben eines modellbasierten Beobachters,
- FIG 4:: eine beispielhafte Dämpfungswirkung eines APC-Systems mit einem Beobachter und ohne,
- FIG 5: ein Bode-Diagramm.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

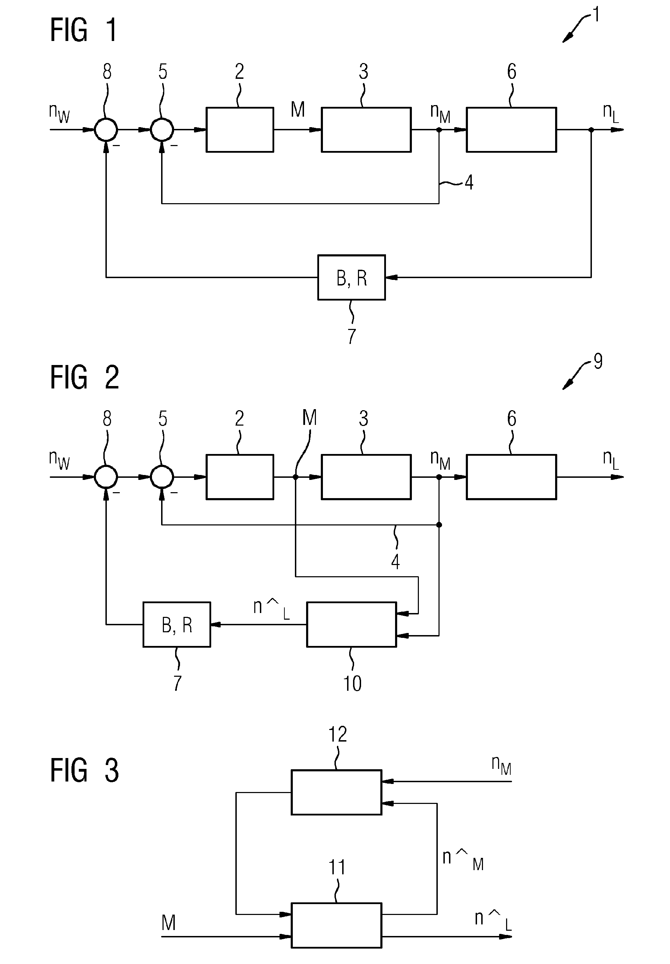

FIG 1 zeigt einen Regelkreis 1 gemäß dem Stand der Technik umfassend einem Regler, hier einem PI-Regler 2, einer Regelstrecke 3, hier als Motor 3 ausgestaltet, nach der eine Messgröße n_{M}, nachfolgend auch als Motordrehzahl n_{M} bezeichnet, ermittelt wird, sowie eine erste Rückführung 4. Die Motordrehzahl n_{M} wird mit einer der Führungsgrößen (Sollgröße) n_{w} am einem Vergleichspunkt 5 verglichen und die Differenz dem ersten Glied, d.h. hier dem PI-Regler 2 zugeführt, der eine Stellgröße, hier als Drehmoment M ausgestaltet, erzeugt.

Der Motor 3 treibt nun über ein mechanisches System 6, eine nicht dargestellte Achse einer Maschine an. Eine Sensormessgröße n_{L} hier z.B. die (LAST)-Ist-Geschwindigkeit und ein Lage-Istwert der Achse wird mit Hilfe eines geeigneten, nicht dargestellten Messsystems gemessen und einem APC (Advanced-Position-Control)-System 7 zugeführt. Dabei bewirkt das APC-System 7 unter Zuhilfenahme von Rückführungsgliedern R und Ausgangssignalen B eine Dämpfung der Schwingungsfrequenzbereiche bzw. Resonanzstellen des mechanischen Systems der Maschine. Das Ausgangssignal B des APC Systems korrigiert die Solldrehzahl des Motordrehzahlregelkreises. Die APC-Aufschaltgröße wird an einem Punkt 8 dem Regelkreis 1 zugeführt. Das APC-System 7 erfordert zwingend ein zweites Messsystem (entweder zweites Lagemesssystem oder einen Beschleunigungssensor). Durch direkte Messung werden auch Eigenfrequenzen im Regelkreis sichtbar, die nicht gedämpft werden sollen, aber aufwändig zu filtern sind. Dies schränkt oft die erreichbare Regelgüte ein.

FIG 2 zeigt einen erfindungsgemäßen Regelkreis 9 mit APC-System 7, umfassend einem Regler, hier einem PI-Regler 2, einer Regelstrecke 3, dem Motor 3, nach der eine Motordrehzahl n_{M} ermittelt wird, sowie eine erste Rückführung 4. Die Motordrehzahl n_{M} wird mit einer der Führungsgrößen (Sollgröße) n_{W} an einem Vergleichspunkt 5 verglichen und die Differenz dem ersten Glied, d.h. hier dem PI-Regler 2 zugeführt. Der Motor treibt nun über ein mechanisches System 6 eine nicht dargestellte Achse einer Maschine an.

Dem APC-System 7 ist nun erfindungsgemäß ein Beobachter 10 vorgeschaltet. Auf Basis des Beobachters 10 wird nun z.B. die Sensormessgröße n_{L} (FIG 1) des ersten Beispiels durch eine Modellgröße n^_{L} nachgebildet.

Dazu wird im Beobachter 10 das dynamische Verhalten des mechanischen Systems in einem mathematischen Modell 11 (FIG 3) abgebildet. Das mathematische Modell 11 (FIG 3) kann hierbei ein Mehrkörpersystem sein. Das Modell 11 (FIG 3) beschreibt das Antwortverhalten des mechanischen Systems 6, hier des Antriebstrangs, auf eine äußere mechanische Anregung (auch auf Führungsgrößen), z.B. der Kraft bzw. das Moment. Zusätzlich zum Modell 11 (FIG 3) bekommt der Beobachter 10 auch das Drehmoment M, welches zwischen PI-Regler 2 und der Strecke 3 gemessen werden, sowie die Rückführungsgröße der von der ersten Rückführung 4 gemessenen Messgröße, die Motordrehzahl n_{M} zum Abgleich der Modellzustände mit den vorhandenen Größen M und n_{M}. Diese Rückführungsgrößen stabilisieren das Modell 11 (FIG 3) des Beobachters 10 und sorgen für das Nachführen der dynamischen Größen.

Anschließend wird mittels des Modells 11 (FIG 3) zumindest eine geschätzte mechanische Größe erzeugt. Diese nachgebildete, geschätzte mechanische Größe wird für das APC-System 7 benutzt. Das APC-System 7 bedämpft die Schwingung, die Gebermischung eröffnet Möglichkeiten für weitere Verfahren zur Schwingungsdämpfung (dämpfungsoptimale Parametrierung), und die Differenzlagerückführung erlaubt die Erhöhung der Steifigkeit des Antriebsstrangs (z.B. KGT, Riemen).

In FIG 2 wird die durch den Beobachter 10 geschätzte mechanische Größe zunächst als Eingangsgröße für das APC-System 7 verwendet. Weiterhin kommt die Anwendung in Frage bei Differenzlagerückführung und Gebermischung.

Es ergeben sich für den erfindungsgemäßen Beobachter 10 mehrere vorteilhafte Anwendungen.

Das Modell 11 (FIG 3) des Beobachters 10 berechnet den Verlauf mechanischer Größen am realen System, die z. B. messtechnisch nicht erreichbar sind. Die Beobachtergrößen, d.h. die geschätzten mechanischen Größen ersetzen das fehlende Messsystem, welches in FIG 1 vorhanden ist. D.h. die Software APC bekommt eine Schnittstelle zu dem Beobachter 10.

Der Beobachter 10 benötigt daher als Eingangssignale nur Größen, die an einer Maschine sowieso verfügbar sind, hier z.B. das Drehmoment M und die Motordrehzahl n_{M}. Es muss kein direktes Messsystem mehr verbaut sein. Dies ist bei den Direktantrieben Torque- und Linearmotoren, die standardmäßig keine direkten Messsysteme verbaut haben, von enormem Vorteil.

Der Beobachter 10 kann für viele Anwendungen sehr einfach sein. Vorteilhaft ist, dass nicht das komplette mechanische Verhalten mit allen Schwingungen und Eigenformen modelliert werden muss, sondern nur ein Teil. Bildet sich im dynamischen Verhalten eine Eigenfrequenz besonders stark und deutlich ab, so kann das Modell 11 (FIG 3) auf diese eine Schwingform reduziert werden, um nur diese gezielt zu dämpfen.

Direkte Messsysteme haben oft das Problem, dass Signale eingefangen und verstärkt werden, die unerwünscht sind. Der Beobachter 10 betrachtet nur die modellierten Frequenzen sowie den Signalinhalt, der am Motor sichtbar ist, was für ein direktes Messsystem von Vorteil ist. Die Vorteile der Gebermischung und der Differenzlagerückführung werden auch für Maschinen ohne direktes Messsystem greifbar. Gerade mechanisch schwingungsanfällige Maschinen haben oft keinen DMS. Weiterhin ist zu beachten, dass auch an High-End-Maschinen mit DMS in manchen Fällen der DMS keine wirksame Anwendung des APC-Systems 7 und den anderen Verfahren erlaubt, da der Geber für diese Verfahren ungünstig angebracht ist. Davon wird man auf Basis des Beobachters 10 unabhängig. Das Modell 11 (FIG 3) des Beobachters 10 kann nicht nur mit dem vom Antrieb ausgeübten Motormoment bestückt werden, sondern auch mit zu erwartenden, externen Kräften. Sind mechanische Interaktionen durch Prozesskräfte bekannt z. B. der Werkzeugeingriff etc., so können diese als weitere, äußere Kraft dem Modell 11 (FIG 3) zugeführt werden.

Schwingungen, die auf diese Weise angeregt werden, werden so im Beobachter 10 frühzeitig erkannt und direkt bedämpft. Der Beobachter 10 kann zudem als eigene Softwarekomponente ausgeführt werden und somit auch als Standalone, z.B. für Messzwecke, genutzt werden.

Die erste Rückführung 4 als eine Kaskadenregelung, ermöglicht zu dem vorteilhafterweise die Stabilität des Gesamtsystems, welche bei einem konventionellen Beobachtersystemen fehlt.

FIG 3 zeigt ein mögliches Innenleben eines modellbasierten Beobachters 10. Dabei soll eine geschätzte Regelgröße n^_{L} für die Stellgröße M in dem Modell 11 (FIG 3) ermittelt werden. Dazu fließen eine geschätzten Messgröße n^_{M} und einer gemessenen Messgröße in eine zweite Rückführung 12, wo ein Vergleich und ein stabiles Nachführen der Größen stattfindet. Das Modell 11 berechnet unter Verwendung des Ergebnisses und der Stellgröße M selber nun die geschätzte Regelgröße n^_{L}.

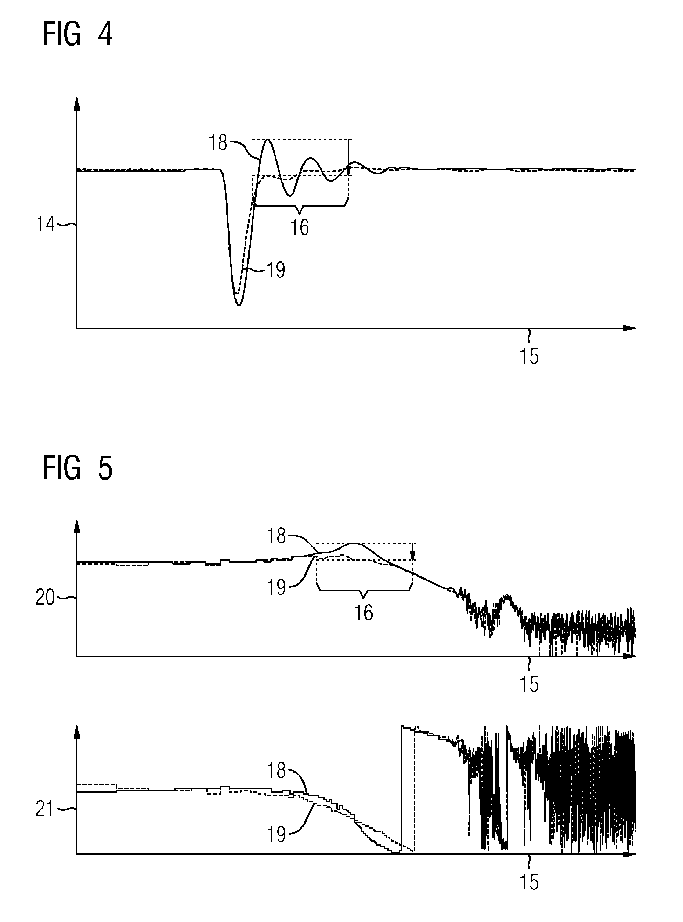

FIG 4 zeigt eine beispielhafte Dämpfungswirkung von einem APC-System mit einem Beobachter 10. Dabei ist hier die Schwingungsamplitude 14 über der Frequenz 15 aufgetragen. In einem Abschnitt 16 wird die Schwingung eines Systems ohne Dämpfung 18 gezeigt als auch mit Dämpfung durch einen Beobachter 19.

FIG 5 zeigt ein Bode-Diagramm mit der Schwingung aus FIG 4. Das Bode-Diagramm ist ein spezieller Funktionsgraph und besteht aus einem Graph für die Amplitudenverstärkung 20 aufgetragen über die Frequenz 15 (oben) und einem für die Phasenverschiebung 21 aufgetragen über die Frequenz 15 (unten). Auch hier wird im Abschnitt 16 die Dämpfung ohne Beobachter 18 und mit Beobachter 19 verdeutlicht.

## Patentansprüche

1. Modellbasierter Beobachter (10) zur Dämpfung eines mechanischen Systems (6) und/oder einer Regelstrecke (3) durch einen Regelkreis (9) umfassend mehrerer Stellgrößen umfassend:
- Eine erste Rückführung (4), durch welche zumindest eine im System gemessene Messgröße (n_{M}) als Regelgröße rückführbar ist, und welche zur Einstellung zumindest einer der Stellgrößen mit einem Sollwert vergleichbar ist,
- Ein mathematisches Modell (11) zur Abbildung des dynamischen Verhaltens des mechanischen Systems (6) und der Regelstrecke (3) durch in einem mathematischen Modell (11) erzeugter Modellvariablen,
- Einen Abgleich vorhandener Messgrößen mit korrespondierenden Modellvariablen des Modells (11) zur Stabilisierung des Beobachters (10) und zur Nachführung vorhandener dynamischer Messgrößen,
- Ein Erzeugen zumindest einer geschätzten mechanischen Größe mittels des Modells (11) zur Dämpfung des mechanischen Systems (6) und/oder der Regelstrecke (3),
- so dass durch den Beobachter (10) der Verlauf zumindest einer mechanischen Größe des mechanischen Systems (6) und/oder der Regelstrecke (3) berechenbar ist, insbesondere einer Größe die messtechnisch nicht erreichbar ist.

2. Modellbasierter Beobachter (10) nach Anspruch 1,
**dadurch gekennzeichnet, dass** die geschätzte Größe als Eingangsgröße für ein nachfolgendes Dämpfungssystem ausgestaltet wirkt.

3. Modellbasierter Beobachter (10) nach Anspruch 1,
**dadurch gekennzeichnet, dass** die geschätzte Größe als Differenzlagerückführungsgröße ausgestaltet ist.

4. Modellbasierter Beobachter (10) nach Anspruch 1,
**dadurch gekennzeichnet, dass** die geschätzte Größe als Gebermischungsgröße ausgestaltet ist.

5. Modellbasierter Beobachter (10) nach einem der vorhergehenden Ansprüche,
**dadurch gekennzeichnet, dass** dem Beobachter (10) weitere externe Größen zuführbar sind.

6. Modellbasierter Beobachter (10) nach einem der vorhergehenden Ansprüche,
**dadurch gekennzeichnet, dass** das mechanische System (6) zur Dämpfung mindestens einer Achse von Werkzeugmaschinen, Produktmaschinen oder Robotern vorgesehen ist.

7. Modellbasierter Beobachter (10) nach einem der vorhergehenden Ansprüche,
**dadurch gekennzeichnet, dass** der Regelkreis (9) eine Erweiterung des Regelkreises (1) mit APC-System (7) ist.

8. Modellbasierter Beobachter (10) nach einem der vorhergehenden Ansprüche,
**dadurch gekennzeichnet, dass** das mathematische Modell (11) das Antwortverhalten eines Antriebstrangs auf eine äußere mechanische Anregung, insbesondere Kraft bzw. Moment beschreibt.

9. Modellbasierter Beobachter (10) nach einem der vorhergehenden Ansprüche,
**dadurch gekennzeichnet, dass** der Beobachter (10) als unabhängige eigene Softwarekomponente ausgestaltet ist.

10. Modellbasierter Beobachter (10) nach einem der vorhergehenden Ansprüche,
**dadurch gekennzeichnet, dass** das mathematische Modell (11) ein Mehrkörpermodell ist.

11. Verfahren zum Betrieb eines modellbasierten Beobachters (10) zur Dämpfung mechanischer Schwingungen (6) und/oder einer Regelstrecke (3) in einem mechanischen System durch einen Regelkreis (9) umfassend mehrerer Stellgrößen **gekennzeichnet durch**:
- Eine erste Rückführung (4), welche zumindest eine im System gemessene Messgröße (n_{M}) als Regelgröße rückführt, und welche zur Einstellung zumindest einer der Stellgrößen mit einem Sollwert verglichen wird,
- Eine Abbildung des dynamischen Verhaltens des mechanischen Systems (6) und der Regelstrecke (3) **durch** in einem mathematischen Modell (11) in dem Beobachter (10) erzeugten Modellvariablen,
- Einen Abgleich vorhandener Messgrößen mit korrespondierenden Modellvariablen des Modells (11) zur Stabilisierung des Beobachters (10) und zur Nachführung vorhandener dynamischer Messgrößen in dem Beobachter (10),
- Und ein Erzeugen zumindest einer geschätzten mechanischen Größe mittels des Modells (11) zur Dämpfung des mechanischen Systems (6) und/oder der Regelstrecke (3),
- so dass **durch** eine Berechnung **durch** den Beobachter (10) der Verlauf zumindest einer mechanischen Größe des mechanischen Systems (6) und/oder der Regelstrecke (3) ermöglicht wird, insbesondere einer Größe die messtechnisch nicht erreichbar ist.

12. Verfahren zum Betrieb eines modellbasierten Beobachters (10) nach Anspruch 11,
**dadurch gekennzeichnet, dass** durch den Abgleich vorhandener Messgrößen mit korrespondierenden Modellvariablen des Modells (11) der Zustand des Modells (11) mit dem des realen Systems weitestgehend in Übereinstimmung gebracht wird.

13. Verfahren zum Betrieb eines modellbasierten Beobachters (10) nach Anspruch 11 oder 12,
**dadurch gekennzeichnet, dass** der Regelkreis (9) eine Erweiterung des Regelkreises (1) mit APC-System (7) darstellt.

14. Verfahren zum Betrieb eines modellbasierten Beobachters (10) nach einem der vorhergehenden Ansprüche 11-13,
**dadurch gekennzeichnet, dass** nur ein Teil der Schwingungen und Eigenformen des mechanischen Systems (6) modelliert werden.

15. Verfahren zum Betrieb eines modellbasierten Beobachters nach einem der vorhergehenden Ansprüche 11-14,
**dadurch gekennzeichnet, dass** bei Vorhandensein einer besonders starken und deutlichen Eigenfrequenz in dem mechanischen System (6), der Beobachter (10) auf die Abbildung dieser einen Eigenfrequenz beschränkt wird.
